Europäisches Patentamt

European Patent Office

Office européen des brevets

(11) Numéro de publication : **0 392 937 B1**

# (12) FASCICULE DE BREVET EUROPEEN

(45) Date de publication du fascicule du brevet :
25.11.92 Bulletin 92/48

(51) Int. Cl.⁵ : **G01M 5/00, G01N 3/08**

(21) Numéro de dépôt : **90420161.3**

(22) Date de dépôt : **30.03.90**

(54) **Procédé permettant l'établissement d'un diagnostic d'état de conduite ou galerie et appareillage pour sa mise en oeuvre.**

(30) Priorité : **04.04.89 FR 8904651**

(43) Date de publication de la demande :
**17.10.90 Bulletin 90/42**

(45) Mention de la délivrance du brevet :
**25.11.92 Bulletin 92/48**

(84) Etats contractants désignés :
**DE ES GB IT**

(56) Documents cités :
**DD-A- 264 760**
**GB-A- 860 457**
**GB-A- 2 192 065**
**US-A- 3 495 340**
**US-A- 3 568 326**
**US-A- 3 956 926**
**SOVIET INVENTIONS ILLUSTRATED, semaine 8713, abrégé no. 87092594, SO2, 8 avril 1987, Derwent Publications Ltd., London, GB;& SU-A-1249305**

(73) Titulaire : **DUNE TRAVAUX SPECIALISES Centre d'entreprise et d'innovation 20 Boulevard Einstein**
**F-69100 VILLEURBANNE (FR)**

(72) Inventeur : **Tidière, Alain**
**Le Carrefour, Plourhan**
**F-22410 Saint Quay Portrieux (FR)**
Inventeur : **Prin, Dominique**
**8 rue Gentil**
**F-69120 Vaulx en Velin (FR)**

(74) Mandataire : **Laurent, Michel et al**
**Cabinet LAURENT et CHARRAS, 20, rue Louis Chirpaz B.P. 32**
**F-69131 Ecully Cedex (FR)**

## Description

La présente invention a trait à un procédé permettant la réalisation de manière simple, efficace, rapide, de diagnostics d'état d'ouvrages d'art existants, tels que conduites, galeries, soumis dans le temps à des contraintes pouvant provoquer soit des dégradations locales (entraînant des nuisances pour leur exploitation), soit des désordres généralisés pouvant aller de la présence de fissures de grande ouverture jusqu'à une ruine totale et ce, afin de réaliser l'établissement d'un diagnostic d'état desdits ouvrages par l'établissement d'une loi de comportement global pour assurer la surveillance et/ou entretien et/ou réfection de manière sûre et efficace ; elle a trait également à un appareillage permettant de mettre en oeuvre ledit procédé.

Il est bien connu que les ouvrages d'art, tels que conduites ou galeries permettant, par exemple, l'alimentation en eau potable ou de tout autre produit de consommation, l'évacuation des eaux usées, les tunnels routiers ou ferroviaires..., sont à base de matériaux qui vieillissent dans le temps par suite des agressions physico-chimiques dont ils sont le siège, des modifications des conditions d'exploitation, des changements de caractéristiques des terrains encaissants éventuels et que les contraintes auxquelles ils sont soumis peuvent entraîner des dégradations locales plus ou moins importantes, et qui impliquent donc non seulement une surveillance, mais également un entretien et une remise en état.

A ce jour, la maintenance et l'entretien de tels ouvrages est basée sur une méthode qui, d'une manière générale, consiste dans des observations visuelles et des auscultations non destructives permettant de juger de la qualité ou de l'homogénéité du revêtement ou du sol encaissant. Pour effectuer de telles auscultations non destructives, on utilise des méthodes faisant appel aux ultra-sons, aux radars, à l'acoustique, à la gammamétrie... Ces méthodes présentent cependant comme inconvénient de ne pas pouvoir tirer une conclusion fiable sur la sécurité offerte par l'ouvrage. Par suite, on les complète par des auscultations destructives qui consistent, d'une manière générale, dans la prise d'échantillons que l'on analyse ensuite en laboratoire.

Toutes les méthodes proposées à ce jour ne donnent cependant pas entièrement satisfaction par le fait qu'elles sont longues et délicates à mettre en oeuvre, notamment lorsque l'on se trouve en présence de conduites enterrées.

Or on a trouvé, et c'est ce qui fait l'objet de la présente invention, un procédé simple et économique qui permet de surmonter ces inconvénients et qui ne nécessite, pour sa mise en oeuvre, qu'un appareillage, qui fait également partie de l'invention, de conception simple, particulièrement fiable et qui peut être utilisé indifféremment dans le cas d'ouvrages ayant des dimensions et/ou formes de section pouvant varier.

Par ailleurs, le procédé selon l'invention permet d'obtenir des mesures qui sont traitées pour établir une loi de comportement mécanique globale de l'ouvrage contrôlé et de tirer une conclusion sur le degré de sécurité réelle de la structure afin de déterminer les interventions nécessaires à son maintien en état (surveillance orientée, renforcement, reconstruction...).

D'une manière générale, l'invention concerne donc un procédé permettant l'établissement d'un diagnostic d'état d'ouvrages existants, tels que conduites, galeries.., en vue d'assurer l'entretien et la maintenance, qui consiste :

- à recueillir des informations de manière visuelle sur le site, permettant non seulement de reconnaître ce site mais également de déterminer de manière globale l'état apparent de dégradation de l'ouvrage ;
- à effectuer une auscultation non destructive permettant de juger de l'état de la conduite ou galerie, auscultation réalisée au moyen d'essais mécaniques effectués de place en place le long de la structure et a l'intérieur de cette dernière, caractérisé en ce que lesdits essais mécaniques consistent à exercer contre les parois internes de l'ouvrage, dans une ou deux directions, des forces opposées d'intensité déterminée connue, pouvant être appliquées successivement de manière croissante puis décroissante, et à mesurer les déformations et/ou déplacements qui en résultent en au moins deux points distincts de l'ouvrage ausculté.

Selon une forme de mise en oeuvre du procédé selon l'invention, on exerce les forces sur les parois en deux directions opposées et on effectue la mesure des déformations et/ou déplacements qui en résultent en au moins deux points de la structure diamétralement opposés.

Grâce à un tel procédé, il est possible, après identification de la structure d'obtenir, au moyen des résultats de ces essais effectués sur le site par une auscultation non destructive, par une analyse multiparamétrique un classement de la longueur de l'ouvrage ausculté en zones à risques croissants (par exemple zones classées en quatre niveaux de risques : 0,1,2,3). En fonction du type de conduite auscultée et du degré de risque trouvé, on peut donc déduire les opérations à entreprendre dans l'ouvrage, opérations qui peuvent aller du simple maintien en l'état jusqu'à la réfection totale.

L'invention concerne également un appareillage permettant la mise en oeuvre du procédé précité et plus particulièrement un appareillage qui permet de réaliser les essais mécaniques permettant l'auscultation non destructive conformément à l'invention.

Cet appareillage se caractérisé en ce qu'il comprend essentiellement :

- un ensemble (chariot ou élément équivalent)

2

ayant une structure et des dimensions permettant de l'introduire et de le déplacer à l'intérieur de l'ouvrage (conduite) à ausculter, ce chariot supportant des moyens (désignés dans la suite de la description par l'expression "système de chargement") permettant d'exercer sur les parois de l'ouvrage des forces dans deux directions opposées et ;

- des moyens permettant de mesurer les déplacements et déformations qui résultent de l'action des forces précitées en au moins deux points distincts ;

- des moyens, de préférence montés sur le chariot précité (mais qui pourraient être également montés sur un chariot annexe), et qui permettent la réception, la mise en mémoire et le traitement des forces appliquées et des déplacements et déformations mesurés, en vue d'un traitement et exploitation permettant d'établir un diagnostic d'état de la longueur de l'ouvrage, une loi de comportement global de la structure par un système expert informatique, un classement de l'ouvrage ausculté en zones à risques et éventuelle ment une définition des opérations de maintien en l'état de l'ouvrage.

Avantageusement et en pratique :

- les moyens permettant d'exercer les forces contre les parois sont constitués essentiellement par un ensemble comportant un vérin à double effet exerçant son action sur deux éléments mobiles, en forme de sabot, et qui viennent s'appliquer contre les parois de l'ouvrage sur une zone en forme de secteurs ;

- les moyens permettent de mesurer les déplacements et déformations qui résultent des forces exercées sont constitués par un ensemble se présentant sous la forme d'une perche télescopique déplaçable indépendamment du chariot et comportant des capteurs électroniques ; de préférence, un système additionnel de mesure des déplacements et déformations dans le sens horizontal est associé au système de mesure précité utilisé quant à lui dans le sens vertical ; ces ensembles sont, comme dit précédemment, indépendants du chariot portant le système de chargement et peuvent être positionnés d'une manière quelconque et être multipliés à souhait.

L'invention et les avantages qu'elle apporte seront cependant mieux compris grâce à l'exemple de réalisation donné ci-après à titre indicatif, mais non limitatif, les trois schémas annexés illustrant vue de face un chargement horizontal (figure 1), vue de face un chargement vertical (figure 2) et vue de côté (figure 3) un type d'appareillage permettant de réaliser les essais mécaniques conformément au procédé selon l'invention.

Comme indiqué précédemment, le procédé conforme à l'invention permettant l'établissement d'un diagnostic d'état d'ouvrages tels que conduites, galeries..., se caractérisé en ce que l'on réalise une auscultation non destructive de l'ouvrage au moyen d'essais mécaniques effectués de place en place le long de la structure et à l'intérieur de cette dernière, lesdits essais consistant à exercer des forces opposées sur les parois internes de l'ouvrage et à mesurer les déformations et déplacements qui en résultent en au moins deux points distincts.

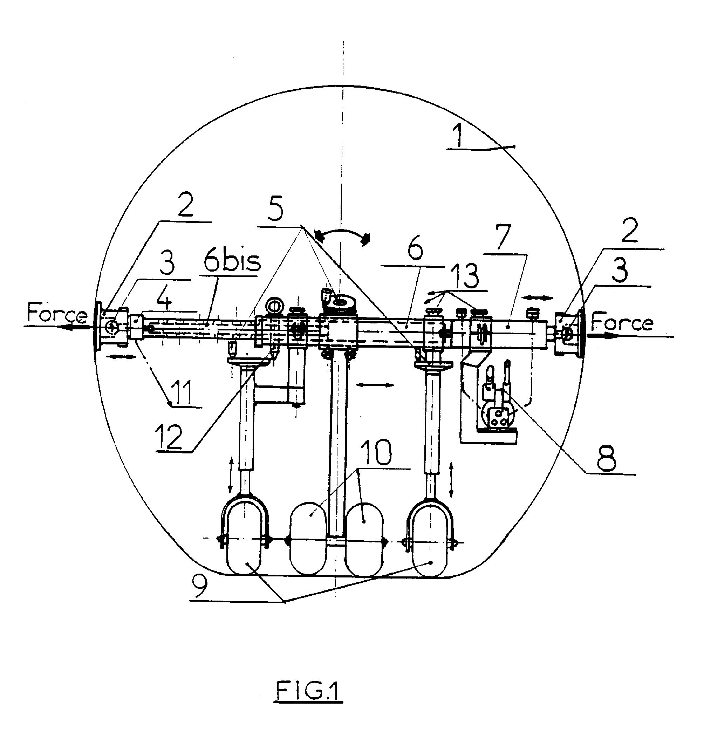

Pour ce faire, on utilise un ensemble tel qu'illustré aux figures 1,2 et 3 conçu de manière à pouvoir être introduit et déplacé à l'intérieur de l'ouvrage à ausculter.

Cet ensemble est, dans le mode de réalisation illustré, constitué essentiellement de deux chariots désignés respectivement par la référence générale (C1) et (C2). Sur le chariot (C1) dit "chariot principal", est monté le système permettant d'exercer les forces opposées sur les parois internes de l'ouvrage (ensemble dit "système de chargement"). Le chariot (C2) (dit "chariot annexe") supporte quant à lui la centrale d'acquisition et de traitement des données et d'alimentation et des moyens permettant la mesure des déplacements et déformations produites. Ce mode de réalisation en deux chariots séparés (C1,C2) n'est cependant pas limitatif et il pourrait être envisagé de n'avoir qu'un seul chariot supportant l'ensemble des moyens précités.

Dans l'exemple de réalisation illustré, le chariot (C1) se présente sous la forme d'un ensemble comprenant un corps central (2,3,4,6,6bis et 7) montés sur des moyens constitués dans le cas présent par un jeu de trois jambes, désigné par la référence (5) portant des roues (9 et 10). Le jeu de jambes (5) est conçu de telle sorte que le niveau des roues et/ou l'écartement entre elles puissent être modifiées en fonction des conduites à l'intérieur desquelles l'appareillage est destiné à être déplacé.

Dans le mode de réalisation illustré, le corps central (2,3,4,6,6bis et 7) et le jeu de jambes (5) sont constituées d'éléments démontables et les roues (9 et 10) sont montées sur les jambes (5) de telle sorte qu'elles puissent être réglées tant horizontalement que verticalement, afin de permettre le calage de l'appareillage à l'intérieur de tout type de profil de conduites. Ces éléments de réglage seront réalisés au moyen de tout élément conventionnel et ne sont donc pas représentés en détail dans les schémas annexés, les possibilités de réglage étant simplement représentées par des axes et des flèches à la figure 1.

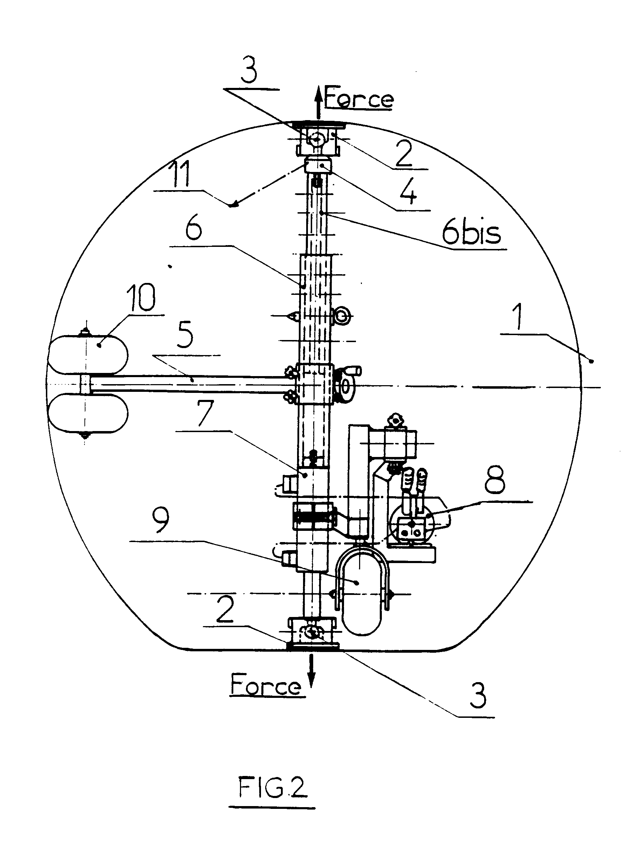

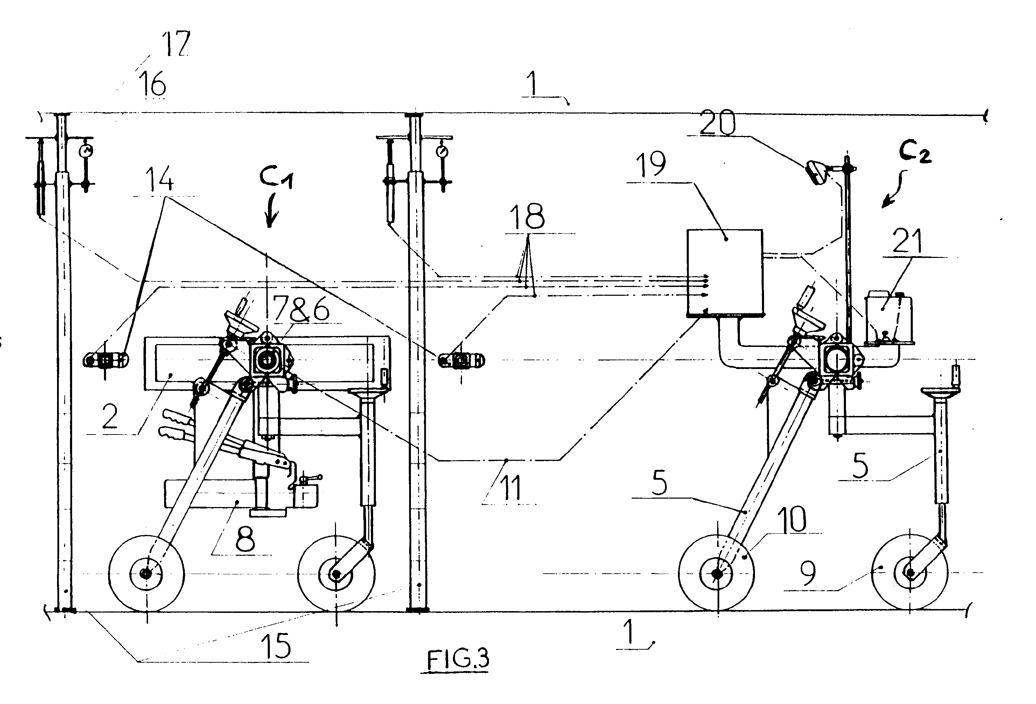

Dans le corps central (2,3,4,6,6bis, et 7) est monté le système de chargement qui permet d'exercer les forces opposées sur les parois internes de l'ouvrage (figures 1 et 2). Ce système de chargement est constitué essentiellement par un vérin longue course et à double effet (7) qui permet de déplacer et mettre en place des éléments (2) exerçant les forces contre la surface des parois et qui est associé à un capteur électronique de force (4) relié à une centrale d'acquisition de données (19 sur la figure 3) et qui permet la lecture, le stockage et le traitement des efforts appliqués. Cette centrale d'acquisition de données (19) est monté sur un chariot (C2) (figure 3) et permet la réception, la mise en mémoire et le traitement des forces appliquées ainsi que des déplacements et déformations mesurées produites par ces forces.

Eventuellement, cette centrale pourrait être reliée directement à un ordinateur afin de permettre un traitement en continu et ce, par l'intermédiaire du système expert pouvant y être incorporé.

Le système de chargement est, comme dit précédemment constitué essentiellement de deux sabots de chargement de grande surface (2) actionnés par un vérin (7). Ce système de chargement se présente, comme illustré aux figures annexées, sous la forme de deux sabots permettant d'appliquer les forces en épousant une partie de la surface interne de la conduite à ausculter. Afin de permettre une adaptation de l'appareillage à l'intérieur de conduites ayant des sections différentes, un étai coulissant (6 et 6bis) chevillé à la position requise par une broche (12) est placé entre les sabots de chargements et le système de chargement.

Un tel système de chargement permet, grâce à son guidage, un positionnement quelconque à l'intérieur de la conduite de manière à exécuter trois types de mouvements, à savoir mouvement vertical, mouvement horizontal et mouvement rotationnel autour d'un axe horizontal.

La mesure des déformations et des déplacements qui résulte des forces exercées contre la paroi, est effectuée au moyen d'un ensemble désigné par les références générales (14 et 15) et visible seulement à la figure 3. Cet ensemble est constitué essentiellement d'un système (14) de mesure des déplacements et des déformations dans le sens horizontal et d'un système (15) de mesure des déplacements et déformations dans le sens vertical. Ces deux systèmes (14,15) se présentent essentiellement sous la forme de perches télescopiques pouvant être fixées entre deux points opposés. Ces systèmes (14,15) sont équipés de capteurs électroniques (17) reliés directement à la centrale d'acquisition (19). Ils sont indépendants du système de chargement et peuvent être positionnés d'une manière quelconque et éventuellement être multipliés à souhait.

Bien entendu, si dans l'exemple illustré aux figures 1,2 et 3, l'appareillage de mesure est déplacé manuellement, il peut être envisagé de l'automatiser, voire éventuellement dans le cas où l'on souhaite effectuer des contrôles dans des milieux agressifs à l'homme, de réaliser un ensemble pouvant être téléguidé à distance. Il pourra également être envisagé de lui associer des accessoires divers, tels que caméras, sondes diverses, profilographes...

Il peut être envisagé également de concevoir un seul chariot regroupant l'ensemble des fonctions de chargement et le transport du matériel annexe (centrale d'acquisition, énergie...) au lieu de deux chariots (un chariot principal pour le chargement et un chariot annexe pour le transport des matériels).

Un tel appareillage peut être utilisé pour effectuer les diagnostics d'état d'ouvrages ayant tout type de profil (circulaire, carré, rectangulaire, ovoïde..). Une mise en oeuvre d'un tel appareillage est le suivant.

Après mise en place de l'appareillage à l'intérieur de la conduite à ausculter et réglage de cet appareillage, on effectue des mesures de place en place le long de la conduite. Lors de ces mesures, on procède à une application croissante puis décroissante des forces et on effectue un relevé automatique desdites forces et des déplacements qu'elle engendre. Les données (force et déplacements) sont transmises à la centrale d'acquisition pour stockage et traitement par le système expert. L'essai étant terminé, on déplace l'engin dans une autre zone pour effectuer un second essai.

A l'aide des mesures effectuées, il est possible de réaliser l'établissement d'un diagnostic d'état de l'ouvrage et d'établir une loi de comportement global, tenant compte de sa structure, de son exploitation et de son environnement immédiat (sol, eau..). Cette loi est introduite dans un modèle numérique de calcul qui est le système expert permettant une identification du système structure-environnement (généralement le sol) et vérifiée par un processus numérique de calcul tridimensionnel permettant l'explication des dégradations relevées lors de l'auscultation (déformations, fissures, écrasement..). Cette première étape permet de trouver l'explication de dégradations éventuelles et d'en mesurer l'impact au niveau de l'exploitation de l'ouvrage.

Une deuxième étape du processus numérique consiste en une analyse multiparamétrique permettant de déduire le ou les paramètres les plus influants vis-à-vis de la ruine de l'ouvrage (état limite ultime). Cette étape permet un classement du linéaire ausculté, en zones à risques, et chacune d'elles correspond à une opération définitive pour la pérennité de l'ouvrage (surveillance, renforcement, reconstruction...). Dans le cas d'une réparation ou d'une reconstruction, une troisième étape basée sur une modélisation fine par éléments finis, permet de définir quantitativement et qualitativement la technique et les matériaux de réparation adoptés pour l'ouvrage.

Un tel procédé d'auscultation est non seulement simple à mettre en oeuvre, mais également permet de déterminer avec précision l'état de l'ouvrage ausculté et la définition des opérations nécessaires à son maintien en état éventuellement.

## Revendications

1. Procédé permettant l'établissement d'un diagnostic d'état d'ouvrages, tels que conduites, galeries.., en vue d'en assurer l'entretien et la maintenance, qui consiste :
   - à recueillir des informations de manière visuelle sur le site, permettant non seulement de reconnaître ce site mais également de déterminer de manière globale l'état apparent de dégradation de l'ouvrage ;
   - à effectuer une auscultation non destructive permettant de juger de l'état de la conduite ou galerie, auscultation réalisée au moyen d'essais mécaniques effectués de place en place le long de la structure et à l'intérieur de cette dernière,

   caractérisé en ce que lesdits essais mécaniques consistent à exercer contre les parois internes de l'ouvrage, dans une ou deux directions, des forces opposées d'intensité déterminée connue, pouvant être appliquées successivement de manière croissante puis décroissante, et à mesurer les déformations et/ou déplacements qui en résultent en au moins deux points distincts de l'ouvrage ausculté.

2. Procédé selon la revendication 1, caractérisé en ce qu'on exerce les forces sur les parois en deux directions opposées et en ce qu'on effectue la mesure des déformations et/ou déplacements qui en résultent en au moins deux points de la structure diamétralement opposés.

3. Appareillage pour la mise en oeuvre du procédé selon l'une des revendications 1 et 2 permettant de réaliser les essais mécaniques nécessaires à l'auscultation non destructive, caractérisé en ce qu'il comprend essentiellement :
   - un ensemble de chariots (C1,C2) ou élément équivalent ayant une structure et des dimensions permettant de l'introduire et de le déplacer à l'intérieur de l'ouvrage à ausculter, et qui supporte des moyens de chargement permettant d'exercer sur les parois de l'ouvrage des forces dans au moins deux directions opposées ;
   - des moyens (14,15) permettant de mesurer les déplacements et/ou déformations qui résultent de l'action des forces précitées en au moins deux points distincts de l'ouvrage et ;
   - des moyens (19), montés sur l'ensemble précité et qui permettent la réception, la mise en mémoire et le traitement des forces appliquées des déplacements et déformations mesurés, en vue d'un traitement et exploitation permettant d'établir un diagnostic d'état de la longueur de l'ouvrage, une loi de comportement global de la structure par un système expert informatique, un classement de l'ouvrage ausculté en zones à risques et éventuellement une définition des opérations de maintien en l'état de l'ouvrage.

4. Appareillage selon la revendication 3, caractérisé en ce que les moyens de chargement permettant d'exercer les forces contre les parois sont constitués essentiellement par un ensemble comportant un vérin (7) à double effet, exerçant son action sur deux éléments mobiles (2) en forme de sabot, et qui viennent s'appliquer contre les parois de l'ouvrage sur une zone en forme de secteurs.

5. Appareillage selon l'une des revendications 3 et 4, caractérisé en ce que les moyens (14,15) permettant de mesurer les déplacements et déformations qui résultent des forces exercées, sont constitués par un ensemble se présentant sous la forme d'une perche télescopique, déplaçable indépendamment de l'ensemble (C1,C2) et comportant des capteurs électroniques.

6. Appareillage selon l'une des revendications 3 et 4, caractérisé en ce que les moyens permettant de mesurer les déplacements et déformations qui résultent des forces exercées, sont constitués de deux ensembles, l'un permettant d'effectuer une mesure dans le sens horizontal, l'autre dans le sens vertical.

## Claims

1. A method enabling a diagnosis to be made of the condition of structures, such as conduits, galleries..., with a view to ensuring servicing and maintenance thereof, which consists :
   . in collecting information visually on site, which not only enables this site to be recconoitred but also the apparent state of degradation of the structure to be determined in a overall manner ;
   . in performing a non-destructive auscultation enabling the condition of the conduit or gallery to be assessed, which auscultation is effected by means of mechanical tests performed intermittently along the structure and inside the latter,

   wherein the said mechanical test consist in exerting against the inner walls of the structure, in one or two directions, opposite forces with a known determined intensity which may be applied successively increasingly and then decreasingly, and in measuring the resulting deformations and/or displacements at least two distinc points on the ausculated structure.

2. The method as claimed in claim 1, characterized in that the forces are exerted on the walls in two opposite directions and wherein the resulting deformations and/or displacements are measured at least two diametrically opposite points of the structure.

3. A piece of equipment for implementing the method as claimed in one of claims 1 and 2 enabling the mechanical tests necessary for the non-destructive auscultation to be carried out, characterized in that it essentially comprises :

. a unit of carriages (C1, C2) or equivalent element, having a structure and dimensions which enable it to be introduced and displaced inside the structure to be auscultated, and which supports loading means which enable forces to be exerted on the walls of the structure at least two opposite directions ;

. means (14,15) enabling the displacements and/or deformations which result from the action of the abovementioned forces to be measured at least two distinct points of the structure ; and

. means (19), mounted on the abovementioned unit and which enable the forces applied and the displacements and deformations measured to be received, memorized and processed with a view to processing and analysis enabling a diagnosis to be made of the condition of the length of the structure, a law on the overall properties of the structure to be established by an expert computer system, and the auscultated structure to be classified into zones at risk, and optionnaly the operations for maintaining the structure to be defined.

4. The piece of equipment as claimed in claim 3, characterized in that the loading means enabling the forces to be exerted against the walls essentially consist of a unit having a double-action thrustor (7) exerting its action on two movable elements (2) in the form of shoes, and which are applied against the walls of the structure over a sector-shaped zone.

5. The piece of equipment as claimed in one of claims 3 and 4, characterized in that the means (14,15) enabling the displacements and deformations which result from the forces exerted to be measured consist of a unit in the form of a telescopic rod which can be displaced independently of the unit (C1,C2) and having electronic sensors.

6. The piece of equipment as claimed in one of claims 3 and 4, characterized in that the means enabling the displacements and deformations which result from the forces exerted to be measured consist of two units, one enabling a measurement to be taken in the horizontal direction and the other in the vertical direction.

**Patentansprüche**

1. Verfahren zur Erstellung einer Zustandsdiagnose für Gebilde nach der Art von Rohrleitungen, Stollen ..., um für Pflege und Wartung zu sorgen, mit den Schritten:

- Sammeln von Informationen über eine Stelle auf optische Art, um diese Stelle nicht nur zu erkennen, sondern ebenfalls auf pauschale Weise den sichtbaren Abnutzungszustand des Gebildes zu bestimmen;

- Durchführen einer zerstörungsfreien Untersuchung, um den Zustand der Rohrleitung oder des Stollens abzuschätzen, wobei die Untersuchung mit Hilfe mechanischer, stellenweise längs der Struktur und in dem Inneren der letzteren durchgeführter Prüfungen erfolgt,

dadurch gekennzeichnet, daß die mechanischen Prüfungen darin bestehen, auf die Innenwände des Gebildes in einer oder zwei Richtungen entgegengesetzt gerichtete Kräfte von bekannter festgelegter Intensität auszuüben, die nach und nach auf zunehmende und dann abnehmende Weise angelegt werden können, und die daraus resultierenden Deformationen und/oder Verschiebungen an wenigstens zwei verschiedenen Punkten des untersuchten Gebildes zu messen.

2. Verfahren nach Anspruch 1, dadurch gekennzeichnet, daß man die Kräfte in zwei entgegengesetzten Richtungen auf die Wände ausübt, und daß man die Messung der daraus resultierenden Deformationen und/oder Verschiebungen an wenigstens zwei diametral gegenüberliegenden Punkten der Struktur durchführt.

3. Vorrichtung zur Durchführung des Verfahrens nach einem der Ansprüche 1 oder 2, um die für die zerstörungsfreie Untersuchung notwendigen mechanischen Prüfungen auszuführen, dadurch gekennzeichnet, daß sie im wesentlichen umfaßt: - eine Anordnung von Wagen (C1, C2) oder ein äquivalentes Teil, mit einer Struktur und Abmaßen, um sie oder es in das Innere des zu untersuchenden Gebildes einführen und darin verschieben zu können, und die oder das eine Ausübungsvorrichtung trägt, um auf die Wände des Gebildes Kräfte in wenigstens zwei entgegengesetzten Richtungen ausüben zu können;

- Mittel (14, 15) zum Messen der aus der Wirkung der erwähnten Kräfte resultierenden Verschiebungen und/oder Deformationen an wenigstens zwei verschiedenen Punkten des Gebildes; und

- eine auf der erwähnten Anordnung montierte Einrichtung (19), die die Aufnahme, das in einen Speicher bringen und die Verarbeitung der aplizierten Kräfte, der gemessenen Verschiebungen und Deformationen erlaubt im Hinblick auf eine Verarbeitung und Auswertung zum Erstellen einer Zustandsdiagnose in Längsrichtung des Gebildes, eines Verlaufes des Gesamtverhaltens der Struktur mittels eines Informatik-Expertsystems, einer Klassifizierung des untersuchten Gebildes in Risikozonen und ggf. einer Definition der Maßnahmen zur Pflege des Gebildes.

4. Vorrichtung nach Anspruch 3, dadurch gekennzeichnet, daß die Ausübungsvorrichtung zum Ausüben der Kräfte auf die Wände im wesentlichen eine Anordnung mit einem doppelt wirkenden Verstellglied (7) umfaßt, das auf zwei bewegliche Elemente (2) in Schuhform einwirkt, die sich an die Wände des Gebildes in einem kreisausschnittförmigen Bereich anlegen.

5. Vorrichtung nach einem der Ansprüche 3 oder 4, dadurch gekennzeichnet, daß die Mittel (14, 15) zum Messen der aus den ausgeübten Kräften resultierenden Verschiebungen und Deformationen aus einer Anordnung in der Form einer Teleskopstange gebildet sind, die unabhängig von der Anordnung (C1, C2) verschiebbar ist und elektronische Meßfühler trägt.

6. Vorrichtung nach einem der Ansprüche 3 oder 4, dadurch gekennzeichnet, daß die Mittel (14, 15) zum Messen der aus den ausgeübten Kräften resultierenden Verschiebungen und Deformationen aus zwei Anordnungen bestehen, die eine zum Durchführen einer Messung in horizontaler Richtung und die andere zur Durchführung in vertikaler Richtung.

FIG.1

FIG.2

FIG.3

EP 0 392 937 B1